# EUROPEAN PATENT APPLICATION

(11) **EP 4 537 658 A1**
(43) Date of publication of application: **16.04.2025**
(21) Application number: 23203328.2
(22) Date of filing: 12.10.2023
(51) Int. Cl.: A01K 29/00, G10L 25/51

(54) **ANIMAL MONITORING DEVICE**

(71) Applicant: Frisense Limited, London Greater London W1S 4FF (GB)
(72) Inventor: MAZZA, Marco, London, W1S 4FF (GB)
(74) Representative: Boult Wade Tennant LLP

(57) **Abstract**

Method for monitoring a group of animals comprising the steps of receiving, at a control unit, data including audio data, from a plurality of electronic devices, wherein each electronic device is attached to an individual animal in the group of animals. processing the received audio data using source separation algorithms, and/or Independent Component Analysis, ICA, algorithms, to separate the calls of individual animals and correlate each call with the electronic device attached to the individual animal that generated the call. Determining, using audio analysis of the separated animal calls, welfare and/or health information of one or more animals in the group of animals. System for monitoring a group of animals comprising a plurality of electronic devices each including a microphone and a transmitter, wherein each electronic device is capable of being attached to an individual animal in a group of animals. a control unit comprising a receiver and data processing apparatus, wherein the data processing apparatus is configured to process, using source separation algorithms, and/or Independent Component Analysis, ICA, algorithms, the received audio data, to separate the calls of individual animals and correlate each call with the electronic device attached to the individual animal that generated the call, and determine, using audio analysis of the separated animal calls, welfare and/or health information of one or more animals in the group of animals.

## Description

### Field of the Disclosure

The present disclosure relates to animal monitoring and in particular, and method and system for monitoring a group of animals so that their health and welfare can be constantly assessed.

### Background of the Disclosure

Animals can easily become unwell or distressed and this is especially the case for animals kept in captivity, such as livestock or zoo animals. When animals are kept in large numbers, it can be difficult to determine if a particular animal is unwell or otherwise in need of assistance. It is both socially and economically important to keep the animals such as livestock happy and healthy. Accordingly, efforts have been taken to find ways of monitoring the wellbeing of captive animals.

Behavioral Monitoring Tool for Pig Farmers: Ear Tag Sensors, Machine Intelligence, and Technology Adoption Roadmap; Santosh Pandey et al, describes a system where an electronic device containing sensors such as an accelerometer and a microphone is attached to a pig, and reports data collected from those sensors to a computing device. This can be used to monitor the pig's wellbeing. This system works for a single animal, but where a group of animals requires monitoring, this system is unsuitable. Furthermore, it would require the computing device being located in proximity to all of the animals at all times.

Consequently, there is required an improved way to remotely monitor the welfare and/or health of a group of animals.

### Summary of the invention

Against this background, there is generally provided a method and system for monitoring a group of animals, and determining welfare and/or health information relating to the individual animals. There is further provided a method and system for determining that an individual animal requires attention due to abnormal welfare and/or health information and identifying that specific animal.

It is well known that may animals, especially pigs, produce a wide range of calls or vocalisations, depending on their current mental state or mood. The claimed invention provides a way to determine the mental and physical state of animals based on these vocalisations. Each animal has an electronic device attached to them, preferably in the form of an ear tag but other attachment devices may be used. Each device includes a microphone which detects audio from the animal (and/or surrounding animals) and transmits it to a control unit. Because the animals are likely to be close to each other, each microphone will likely pick up audio form more than one animal. Therefore, the control unit runs an audio separation algorithm, such as an Independent Component Analysis (ICA) algorithm, to separate the audio data into the calls produced by individual animals. By correlating each call with the ear tag attached to the animal that produced the call, the control unit can determine which animal produced which call.

The control unit can then run an audio analysis algorithm on each call, which can determine the mental and physical state of each animal. For example, pigs produce different calls such as grunts, barks, squeals, pants and coughs. These can be associated with different mental or physical states such as happy, excited, stressed, in pain, too hot or cold, hungry, thirsty or unwell. The general state of wellbeing of the whole group of animals can be determined from the audio analysis of the individual calls. In addition, if an animal has a negative mental state or is otherwise indicating ill-health and in need of attention, this can be identified. For example, an animal may have an injured leg, and the audio analysis on their calls may indicate that they are in pain or distress. In this case, an alert may be triggered and assistance may be obtained (e.g., a notification may be sent to a person such as a farmer or veterinarian). This notification may be issued be via a mobile device such as a mobile phone. Additionally, the control unit can transmit an alert to the ear tag of the injured animal, causing an LED to flash or trigger another kind of physical or visual indicator. This can help the farmer quickly identify the distressed animal in a large group of animals.

As a further benefit of the audio separation algorithm, social interaction within the group of animals can be tracked. This may be based on a magnitude of a coefficient of each audio sample in the audio data, where the magnitude of the coefficient is proportional to the distance between the individual animals. This can be used to predict a spread of disease present within the group of animals. If an animal is unwell, it can be determined which other animals it has been in close contact with, and therefore which animals are likely to become unwell before they start to show symptoms.

In a first aspect, there is provided a method for monitoring a group of animals comprising the following steps. Data, including audio data, is received at a control unit from a plurality of electronic devices. Each of the plurality of electronic devices is attached to an individual animal in the group of animals. The received audio data is then processed using source separation algorithms and/or independent component analysis algorithms to separate the calls of individual animals. The separated calls are then correlated with the electronic device attached to the individual animal that generated the call. Using audio analysis of the separated calls, the welfare and/or health information of one or more of the animals in the group of animals can then be determined.

Advantageously, this method may allow multiple animals, and specifically the calls produced by multiple animals, to be accurately and simultaneously monitored. Since the number of sources of audio data is at least equal to the number of animals, and audio data can be collected from a location close to the animal generating the sound, source separation algorithms can be effectively used to correlate each call with the animal which produced it. Consequently, audio analysis can be run on each call, and the welfare and/or health information of the individual animals can be accurately determined. This means that the health and welfare of all the animals can be improved, and the group is more likely to be happy and healthy.

In some embodiments, the audio analysis of the separated calls may identify a particular animal which has welfare and/or health information that falls outside of predetermined allowable parameters. This advantageously allows a particular animal in distress to be accurately identified, and notification and/or help may be provided quickly.

In some embodiments, when an animal is identified as having welfare and/or health information which falls outside of the predetermined allowable parameters, an alert may be transmitted to a mobile device. Additionally or alternatively, an alert may be transmitted to the electronic device attached to the animal that is identified as having welfare and/or health information outside of the predetermined allowable parameters. This may advantageously allow a person, such as a farmer or zookeeper, to be made aware of an animal in need of help instantaneously. It may also help the person quickly identify the specific animal in need of help in a large group of animals.

In some embodiments, the audio analysis of the separated animal calls may be performed with a machine learning algorithm. Preferably, the machine learning algorithm may be one of temporal convolutional networks and forecasting, long short-term recurrent networks and/or transformers. Other machine learning algorithms may be used, including trained and untrained algorithms.

In some embodiments, the accuracy and/or the efficiency of the machine learning algorithm may be improved by continuously collecting data, which may be stored in a database. This advantageously means that, over time, the welfare and/or health information of the animals can be more accurately and/or quickly determined since the algorithm or algorithms can become more tailored to the specific group of animals being monitored.

In some embodiments, when an Independent Component Algorithm (ICA) may be used to separate the calls of individual animals, the ICA may further produce a correlation matrix indicating a magnitude of one or more independent components within the audio data. This magnitude may be proportional to a distance between individual animals, and therefore indicate social interaction between individual animals within the group of animals. This can advantageously be used to track the likely spread of disease within the group or to identify critical interactions between two or more animals (e.g., between two males during a breeding period) or between a new element or individual and the remainder of the animal population within a farm, to identify problems with social inclusion). If one animal is identified as being ill, either using audio analysis of their calls, or by a different method, the other animals in the group of animals that the infected animal has had contact with can be identified. This can allow actions to be taken to reduce the risk of larger numbers of animals becoming infected, such as by quarantining the likely infected animals before they show symptoms. This reduces the risk of diseases spreading, whilst avoiding unnecessary quarantine for more animals than necessary. The size of quarantine may be varied depending on the type of identified illness or disease, for example. Animals requiring quarantine may be automatically identified and/or separated (e.g., by closing off sections of a building or land using electric gates or other means).

In a second aspect, there is provided a system for monitoring a group of animals comprises a plurality of electronic devices, each of which includes a microphone and a transmitter, and each of which being capable of being attached to an individual animal in a group of animals. The system further comprises a control unit that includes a receiver and data processing apparatus. The data processing apparatus is configured to process, using source separation algorithms, and/or Independent Component Analysis (ICA) algorithms, the received audio data. This is to separate the calls of individual animals and correlate each call with the electronic device attached to the individual animal that generated the call. The data processing apparatus is further configured to determine, using audio analysis of the separated animal calls, welfare and/or health information of one or more animals in the group of animals.

Advantageously, this system allows multiple animals, and specifically the calls produced by multiple animals, to be accurately and simultaneously monitored. Since the number of microphones is at least equal to the number of animals, and each microphone is located in close proximity to an animal, source separation algorithms can be effectively used to correlate each call with the animal which produced it. Consequently, audio analysis can be run on each call, and the welfare and/or health information of the individual animals can be accurately determined. Consequently, the health and welfare of all the animals can be improved, and the group is more likely to be happy and healthy. Furthermore, sources of distress can be removed more quickly.

In some embodiments, the control unit may be further configured to identify, based on the results of the audio analysis of the separated animal calls, welfare and/or health information of an individual animal falling outside predetermined allowable parameters. This advantageously allows a particular animal in distress to be accurately identified, and help may be provided quickly.

In some embodiments, each of the plurality of electronic devices may further include a light emitting device. The light emitting device may illuminate to indicate the individual animal which has been identified as having welfare and/or health information that falls outside of the predetermined allowable parameters. This advantageously allows the specific animal in need of help to be easily identified within a group of animals. A person, such as a farmer or zookeeper, may then be able to quickly provide assistance to the correct animal.

In some embodiments, the data processing apparatus may include a cloud-based database. An advantage of this is that large quantities of data can be stored off site. Furthermore, data can be shared between different sites (such as farms or zoos) using the same system. The sharing of data between different sites will improve the machine learning algorithms at all of the sites more than could be achieved individually.
In some embodiments, the audio analysis of the separated animal calls may be performed with a machine learning algorithm. Preferably, the machine learning algorithm may be one of temporal convolutional networks and forecasting, long short-term recurrent networks and/or transformers. Other algorithms may be used, such as linear regression, support vector machine (SVM), k-nearest neighbour, KNN, and random forest, for example.

In some embodiments, the accuracy and/or the efficiency of the machine learning algorithm may be improved by continuously collecting data which is stored in a database. This advantageously means that, over time, the welfare and/or health information of the animals can be more accurately and/or quickly determined since the algorithm or algorithms can become more tailored to the specific group of animals being monitored.

In some embodiments, when an Independent Component Algorithm is used to separate the calls of individual animals, the ICA may further produce a correlation matrix indicating a magnitude of one or more independent components within the audio data. This magnitude may be proportional to a distance between individual animals, and therefore indicate social interaction between individual animals within the group of animals. This can advantageously be used to track the likely spread of disease within the group. If one animal is identified as being ill, either using audio analysis of their calls, or by a different method, the other animals in the group that the infected animal has had contact with can be identified. This can allow actions to be taken to reduce the chance of the whole group becoming infected, such as by quarantining the likely infected animals before they show symptoms.

In some embodiments of both the first and second aspects provided, the electronic device may be an ear tag or other permanent or semi-permanent fixing to the animal. This advantageously allows for the electronic device to be easily attached to the animals, without causing them undue distress but still ensuring the device is unlikely to become unintentionally detached.

In some embodiments of both the first and second aspects provided, the group of animals may be pigs, swine, cattle, sheep or other livestock or zoo animals. Preferably, the animals may be pigs. By using this method or system with farm animals, the welfare of the livestock can be increased, providing better living conditions for the animals. In addition, this will reduce premature death, reducing food waste and unnecessary distress.

In respect of any and all of the aspects disclosed herein, features of a method for manufacturing and/or operating corresponding with those of any one or more of the systems or methods for monitoring a group of animals disclosed may additionally be provided. Combinations of aspects are also possible. Moreover, combinations of specific features from one aspect with the features of another aspect are also disclosed, where such combinations are compatible. Specific examples of such combinations are suggested herein, by way of example.

The computer system may include a processor or processors (e.g. local, virtual or cloud-based) such as a Central Processing Unit (CPU), and/or a single or a collection of Graphics Processing Units (GPUs). The processor may execute logic in the form of a software program. The computer system may include a memory including volatile and non-volatile storage medium. A computer-readable medium (CRM) may be included to store the logic or program instructions. For example, embodiments may include a non-transitory computer-readable medium (CRM) storing software comprising instructions executable by one or more computers which, upon such execution, cause the one or more computers to perform the disclosed methods. Non-transitory CRM may refer to a CRM that stores data for short periods or in the presence of power such as a memory device or Random Access Memory (RAM). For example, a non-transitory computer-readable medium may include storage components, such as, a hard disk (e.g., a magnetic disk, an optical disk, a magneto-optic disk, and/or a solid state disk), a compact disc (CD), a digital versatile disc (DVD), a floppy disk, a cartridge, and/or a magnetic tape. The different parts of the system may be connected using a network (e.g. wireless networks and wired networks). The computer system may include one or more interfaces. The computer system may contain a suitable operating system such as UNIX, Windows (RTM) or Linux, for example.

### Brief description of the Figures

The disclosure may be put into practice in a number of ways and preferred embodiments will now be described by way of example only and with reference to the accompanying drawings, as now described.
Figure 1 shows a flow diagram of the method according to an example aspect.
Figure 2 shows a flow diagram of the method according to a further an example aspect.
Figure 3 shows a system diagram of an example implementation.
Figure 4 shows a computer system which may represent the data processing apparatus an example implementation.

### Detailed description of the preferred embodiments

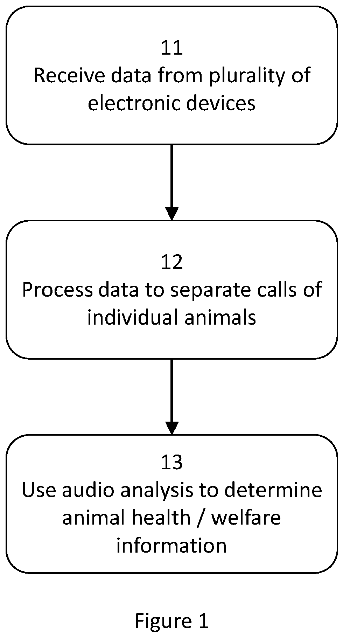

With reference to Figure 1, a method for monitoring a group of animals will be described. In a first step 11, data, which includes audio data, is received from a plurality of electronic devices. Each of the electronic devices is attached to or located on an individual animal within a group of animals. The data may include further data such as data from a temperature sensor, accelerometer, gyroscope, GPS device and/or any other sensor. The data may be received via Bluetooth, Bluetooth Low Energy, Zigbee, Z-Wave, LoRa, Wi-Fi, radio, or any other wireless communications protocol or method, for example.

At a second step 12, the received audio data is processed to separate the calls of individual animals. Many animals are social or herding, and therefore prefer to spend time near to each other. This means that each electronic device will not only detect calls from the animal to which it is attached, but also calls from nearby animals. In order to determine which animal generated which call, the audio data must be separated into the component audio sources. The audio separation is done by source separation algorithms, which may be an Independent Component Analysis (ICA) algorithm or other suitable method. The audio data comprises audio signals obtained from a number of different sources, as each electronic device is a source of audio data. An ICA algorithm is beneficial in this scenario because the number of microphones is equal to the number of animals. I.e., the number of components may be equal to the number of observed signals. After the audio data has been separated into the individual animal calls, each call is correlated to the electronic device attached to the animal that generated the call. Therefore, each call becomes associated with the animal that generated the call.

At a third step 13, audio analysis is used to determine animal health and/or welfare information. The separated animal calls may be analysed using audio analysis algorithms. These algorithms may analyse the calls in the time domain or frequency domain, or both. The algorithms may analyse the frequency, frequency change, tonal spectrum, length or any other characteristics of the calls. As a result of the audio analysis of the calls, the welfare and/or health information of the animal or animals that produced the calls can be determined. The audio analysis algorithm may use machine learning or other technique to analyse the audio. The welfare and/or health information may include if the animal is happy, excited, stressed, in pain, too hot or cold, hungry, thirsty or unwell, or any other mental or physical characteristic or attribute. Each characteristic, attribute or emotion may be assigned a value on a scale relating to the magnitude of that characteristic or emotion. For example, it may be determined that an animal is 60% hungry, 30% in pain, or 90% happy.

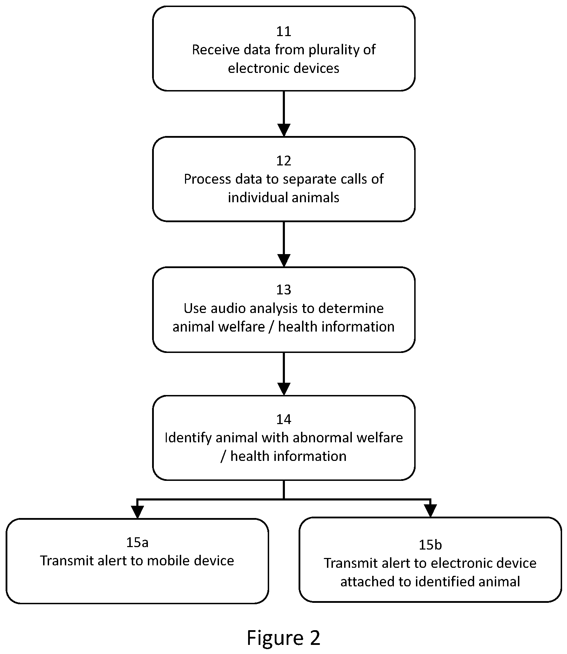

With reference now to Figure 2, the method of Figure 1 may be expanded by identifying an animal with abnormal welfare and/or health information 14. The welfare and/or health information generated by the audio analysis algorithm may be compared against a set of predetermined parameters which describe the allowable levels of each characteristic, attribute, or emotion for the animals. If the information relating to a particular animal falls outside of the predetermined allowable parameters, then the animal may require help or attention. As such, when the calls of an animal are identified as corresponding to welfare and/or health information which falls outside of the allowable predetermined parameters, the electronic device attached to the animal that generated the call, and consequently the animal in need of help, can be identified.

After identifying an animal with abnormal health and/or welfare information, an alert may be transmitted to a mobile device, as shown in step 15a. The alert may be transmitted to a mobile telephone, a pager, a tablet computer, or any other portable electronic device, or any other electronic device associated with a user. The alert may be transmitted via Bluetooth, Wi-Fi, over a mobile or cellular network, or any other method of communication between electronic devices. The mobile device may belong to a farmer, zookeeper or any other person capable of giving help to the animal. The alert may contain information such as: a name, number or other identifier corresponding to the animal in need of help; information relating to the suspected issue with the animal, i.e., are they in pain, hungry, too hot etc; approximate location of the animal; ambient or body temperature; or any other information about the animal. After receiving the alert, the farmer, zookeeper or other person can quickly and easily provide assistance to the animal, and already know what might be wrong with the animal before they reach them. The alert may be issued without using a mobile device, such as by providing an output on a computer monitor or recording the event in a database or file, for example.

Additionally or alternatively to step 15a provided above, an alert may be transmitted to the electronic device attached to the animal identified as needing help, as shown in step 15b. This alert signals to the electronic device that the animal that it is attached to has been identified as needing assistance. In response to receiving this alert, the electronic device may provide an indication of the animal in need of assistance. This may be illuminating or flashing an LED or other light emitting device, sounding a buzzer or other audible device, or providing any other physical indication. Additionally or alternatively, the electronic device may change its mode of operation based on receiving the alert. For example, the electronic device may collect and report data more or less frequently, change the data which it reports, or alter any other operating characteristic.

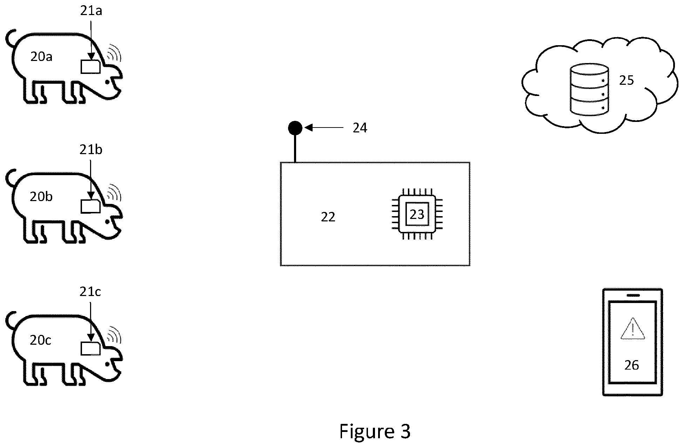

With reference now to Figure 3, a system in accordance with one embodiment of the claimed invention will be described. The system is for monitoring a group of animals 20. The group comprises a plurality of individual animals 20a, 20b, 20c. The group of animals may be any animal type, however they are preferably farm animals such as pigs, swine, cattle, sheep, or other livestock. The system further comprises a plurality of electronic devices 21a, 21b, 21c, and a control unit 22 which includes a receiver 24 and data processing apparatus 23. Figure 3 shows three individual animals with three individual electronic devices, however there may be any number. The number of electronic devices may not be equal to the number of animals, but preferably the number of electronic devices is equal to the number of animals. The system may further include a database such as a cloud-based database 25, and/or a mobile device 26. The microphones do not need to be attached to the animals but may be static. In this case, a tag attached to each animal may measure and transmit the animal's location (e.g., at regular intervals or continuously). The locations of the fixed microphones may be determined in advance. Therefore, the sounds made by the animals and detected by the fixed microphones may be associated with particular animals by correlating the position of the animal with respect to the microphone or microphones that detected the sound.

The control unit 22 may additionally include a transmitter. This may be integrated with the receiver 24 as a transceiver, or it may be a separate transmitter (not shown).

The electronic devices 21a, 21b, 21c each include a microphone and a transmitter. They may each optionally include or more of: a processor; memory; a battery; a receiver; an LED or other light source; a buzzer or other audio source; sensors such as a temperature sensor, accelerometer, gyroscope, moisture sensor or other sensor; and/or a GPS device. The electronic device 21a, 21b, 21c may be an ear tag (e.g., part of an ear tag used to identify livestock for regulatory purposes) and include suitable means for attaching the device to the ear of an animal, such as a button, spike or any other method. The electronic device 21 may be waterproof to prevent damage during rain or moist conditions. The LED or light emitting device on the electronic device may illuminate or flash to indicate the current state of the animal to which it is attached. For example, the LED may flash if the animal needs help. In some cases, the LED may be a bicolour or tricolour LED and illuminate different colours in different conditions. For example, the LED may illuminate green for happy, amber for stressed, red for in pain, blue for thirsty etc. The LED may also indicate an error or fault with the tag (e.g., low battery or failing transmitter).

The data processing apparatus 23 included in the control unit 22 may include a processor, memory and a non-transitory computer-readable storage medium storing instructions (not shown). The instructions may allow the control unit to perform the method as shown in Figures 1 or 2. The data processing unit may further include, or be connected to, a database 25. The database 25 may be a cloud-based database 25. The database 25 may store data obtained from the electronic devices. The data stored in the database 25 can be used to train, and subsequently improve, the machine learning algorithms used to analyse the audio data. By constantly training the machine learning algorithms, the algorithms can become more efficient or accurate at determining welfare and/or health information. By having a cloud-based database, a plurality of control units at a number of different sites (e.g., farms or zoos) can share data. This can allow a larger pool of training data than if each site only used its own data, thus further improving the operation of the algorithms, and making those improvements more quickly.

The system may include a mobile device 26 (or a plurality of mobile devices). The mobile device 26 can receive alerts from the control unit 22 to alert the user that an animal requires help (e.g., using a mobile application over a wireless protocol, such as Bluetooth and/or Wi-Fi). This allows the farmer, zookeeper or other person to be alerted to an animal needing help without having to be in the vicinity.

The system can also be used to track social interaction within the animals. For example, if animal 20a spends a lot of time near animal 20b, but less time near animal 20c, electronic device 21a will detect more calls more clearly from animal 20b than animal 20c. Similarly, electronic device 21b will detect more calls from animal 20a than electronic device 21c does. As described previously, the ICA algorithm will assign larger coefficients to the calls corresponding to animals that are in close proximity, meaning social interaction within the group of animals can be tracked. The system may compare the time spent by animals in close proximity against one or more time thresholds to determine if alerts also need to be issued for neighbouring animals to one indicating distress or health issues, for example.

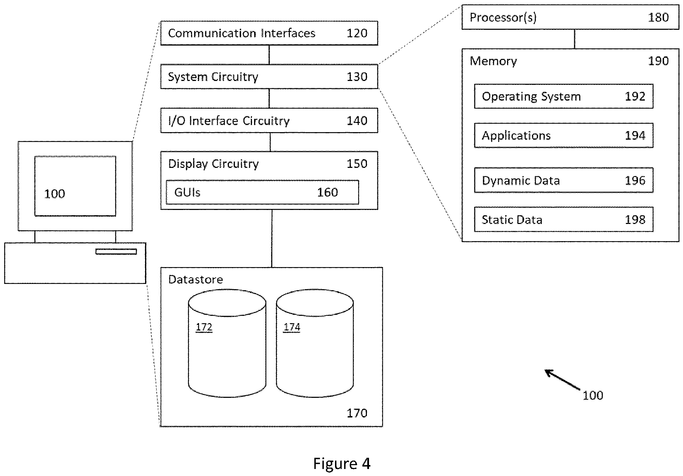

As shown in Figure 4, the computer system 100, which may represent the data processing apparatus 23, includes a number of components including communication interfaces 120, system circuitry 130, input/output (I/O) circuitry 140, display circuitry and interfaces 150, and a datastore 170. The system circuitry 120 can include one or more processors or CPUs 180 and memory 190. The system circuitry 130 may include any combination of hardware, software, firmware, and/or other circuitry. The system circuitry 130 may be implemented, with one or more systems on a chip (SoC), application specific integrated circuits (ASIC), microprocessors, and/or analog and digital circuits.

The display circuitry may provide one or more graphical user interfaces (GUIs) 160 and the I/O interface circuitry 140 may include touch sensitive or non-touch displays, sound, voice or other recognition inputs, buttons, switches, speakers, sounders, and other user interface elements. The I/O interface circuitry 140 may include microphones, cameras, headset and microphone input /output connectors, Universal Serial Bus (USB) connectors, and SD or other memory card sockets. The I/O interface circuitry 140 may further include data media interfaces (e.g., a CD-ROM or DVD drive) and other bus and display interfaces.

The memory 190 may include volatile (RAM) or non-volatile memory (e.g., ROM or Flash memory). The memory may store the operating system 192 of the computer system 100, applications or software 194, dynamic data 196, and/or static data 198. The datastore or data source 170 may include one or more databases 172, 174 and/or a file store or file system, for example.

The method and system may be implemented in hardware, software, or a combination of hardware and software. The method and system may be implemented either as a server comprising a single computer system or as a distributed network of servers connected across a network. Any kind of computer system or other electronic apparatus may be adapted to carry out the described methods.

As used throughout, including in the claims, unless the context indicates otherwise, singular forms of the terms herein are to be construed as including the plural form and vice versa. For instance, unless the context indicates otherwise, a singular reference herein including in the claims, such as "a" or "an" (such as an electronic device) means "one or more" (for instance, one or more electronic device). Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the disclosure. That is, an element termed a "first" element may instead be termed a "second" element and an element termed a "second" element may instead be considered a "first" element.

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described throughout, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

Unless otherwise described, all technical and scientific terms used throughout have a meaning as is commonly understood by one of ordinary skill in the art to which the various embodiments described herein belongs.

All of the features disclosed herein may be combined in any combination, except combinations where at least some of such features and/or steps are mutually exclusive. In particular, the preferred features of each aspect of the disclosure are generally applicable to all aspects of the disclosure and the features of all of the aspects may be used in any combination. Likewise, features described in non-essential combinations may be used separately (not in combination).

A method of manufacturing and/or operating any of the devices disclosed herein is also provided. The method may comprise steps of providing each of features disclosed and/or configuring the respective feature for its stated function.

As will be appreciated by the skilled person, details of the above embodiment may be varied without departing from the scope of the present invention, as defined by the appended claims.

For example, the tag may be attached to any animal, wild or domesticated. The tag may also be attached to pets, for example. Different wireless communication protocols may be used. Further automated actions may take place when an animal in distress is detected. For example, medicine, treatment, food or other materials may be provided to the animals or animals using automated electro-mechanical means. Different automated actions may take place depending on the type of distress detected (e.g., food for hunger, water for thirst, medicine for illness, etc.). The audio analysis may also involve the use of Fast Fourier Transforms (FFT) algorithms, for example.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method for monitoring a group of animals comprising the steps of:
receiving, at a control unit, data including audio data, from a plurality of electronic devices, wherein each electronic device is attached to an individual animal in the group of animals;
processing the received audio data using source separation algorithms, and/or Independent Component Analysis, ICA, algorithms, to separate the calls of individual animals and correlate each call with the electronic device attached to the individual animal that generated the call; and
determining, using audio analysis of the separated animal calls, welfare and/or health information of one or more animals in the group of animals.

2. The method of claim 1 further comprising the step of:
identifying, based on the results of the audio analysis of the separated animal calls, welfare and/or health information of an individual animal falling outside predetermined allowable parameters.

3. The method of claim 2 wherein when an animal is identified as having welfare and/or health information outside of the predetermined allowable parameters, one or more of:
an alert is transmitted to a mobile device; and
an alert is transmitted to the electronic device attached to the animal identified as having welfare and/or health information outside of the predetermined allowable parameters.

4. The method of any preceding claim wherein the audio analysis of the separated animal calls is performed with a machine learning algorithm, and wherein preferably the machine learning algorithm is one of:
temporal convolutional networks and forecasting;
long short-term recurrent networks;
and/or transformers.

5. The method of claim 4 wherein the accuracy and/or efficiency of the machine learning algorithm is improved by continuously collected data stored in a database.

6. The method of any preceding claim wherein the ICA algorithms further produces a correlation matrix indicating a magnitude of one or more independent components within the audio data, wherein the magnitude is proportional to a distance between individual animals and indicates social interactions between individual animals within the group of animals.

7. A system for monitoring a group of animals comprising:
a plurality of electronic devices each including a microphone and a transmitter, wherein each electronic device is capable of being attached to an individual animal in a group of animals;
a control unit comprising a receiver and data processing apparatus, wherein the data processing apparatus is configured to:
process, using source separation algorithms, and/or Independent Component Analysis, ICA, algorithms, the received audio data, to separate the calls of individual animals and correlate each call with the electronic device attached to the individual animal that generated the call; and
determine, using audio analysis of the separated animal calls, welfare and/or health information of one or more animals in the group of animals.

8. The system of claim 7 wherein the control unit is further configured to identify, based on the results of the audio analysis of the separated animal calls, welfare and/or health information of an individual animal falling outside predetermined allowable parameters.

9. The system of claim 8, wherein the each of the plurality of electronic devices further includes a light emitting device which illuminates to indicate the individual animal that's welfare and/or health information falls outside predetermined allowable parameters.

10. The system of any of claim 7-9, wherein the data processing apparatus includes a cloud-based database.

11. The system of any of claims 7 - 10, wherein the audio analysis of the separated animal calls is performed with a machine learning algorithm, and wherein preferably the machine learning algorithm is one of:
temporal convolutional networks and forecasting;
long short-term recurrent networks;
and/or transformers.

12. The system of claim 11 wherein the accuracy and/or efficiency of the machine learning algorithm is improved by continuously collected data stored in a database.

13. The system of any of claim 8 - 12, wherein the output of the ICA algorithm further produces a correlation matrix indicating a magnitude of one or more independent components within the audio data, wherein the magnitude is proportional to a distance between individual animals and indicates social interactions between individual animals within the group of animals.

14. The method or system of any preceding claim wherein the electronic device is an ear tag.

15. The method or system of any preceding claim wherein the group of animals are pigs, swine, cattle, sheep, or other livestock.
